# EUROPEAN PATENT APPLICATION

(11) **EP 4 557 595 A1**
(43) Date of publication of application: **21.05.2025**
(21) Application number: 24213389.0
(22) Date of filing: 15.11.2024
(51) Int. Cl.: H02M 1/00, H02M 1/10, H02M 7/483, H02J 3/02

(54) **MULTIPORT MULTILEVEL POWER CONVERTER**

(30) Priority: 15.11.2023 NL 2036270
(71) Applicant: Alfen N.V., 1332 AM Almere (NL)
(72) Inventor: van der Meer, Simon Wilhelmus, 1332 AM Almere (NL); van Wesenbeeck, Marinus Petronella Nicolaas, 1332 AM Almere (NL)
(74) Representative: Arnold & Siedsma

(57) **Abstract**

A power converter arrangement comprising a first AC port, a second AC port, a DC port, a DC bus, an AC/DC stage arranged in between the first AC port and the DC port, a multilevel converter comprising at least two converter legs, wherein each converter leg comprises two converter arms connected in series at a middle point, wherein each converter arm comprises a plurality of series connected converter cells, each converter cell comprising at least one energy storage element for storing energy, and semiconductor switches for connecting the energy storage element to the rest of the converter arm, and a controller circuitry for controlling at least one of the DC bus voltage, one or more of the voltages of the plurality of energy storage elements, and the second voltage.

## Description

The invention relates to a multiport multilevel power converter arrangement, in particular for microgrid uses and/or for high power charging purposes.

With the development of renewable energy sources to face the energy transition from fossil energy to carbon-free energy, there is an increased interest for new efficient power converter solutions for creating local microgrids or for creating local charging stations. Microgrid uses comprise grid forming for forming a grid, grid feeding for feeding into a grid and grid interactive functioning, where a grid interactive functioning allows an agile behaviour over time capable of grid forming, grid feeding and stand-alone operation (for local storage on batteries for instance). In other words, a microgrid is a localized energy system, typically designed to function independently or in coordination with the main power grid.

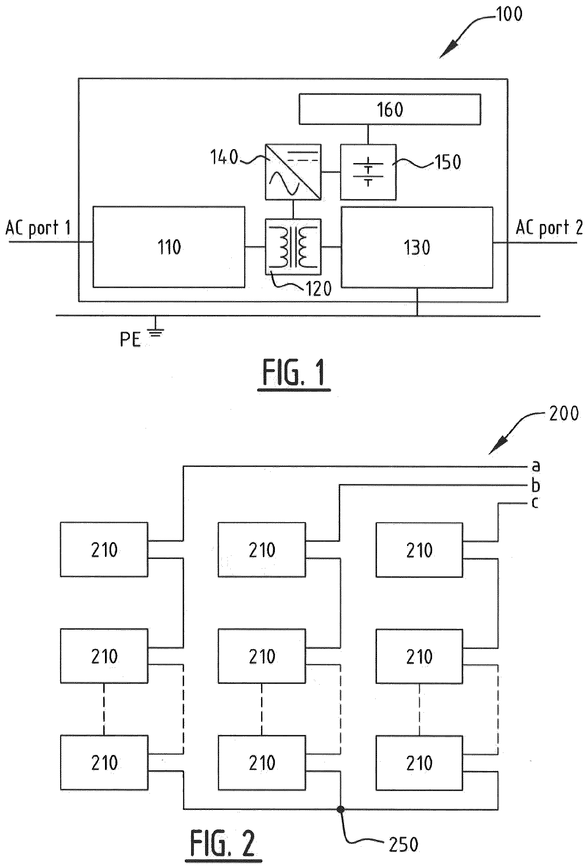

Figure 1 illustrates a prior art solution for creating a local microgrid using battery storage. The converter arrangement 100 of Figure 1 shows a first AC port connected via a protection circuit 110 to a transformer arrangement 120. The transformer arrangement 120 comprises multiple windings, a first winding connected to the protection circuit 110, a second winding connected to a protection circuit 130 for output to a second AC port and a third winding connected to an AC/DC converter connected to a string of batteries 150. A controller 160 controls the switches of the AC/DC converter to regulate the power delivered at the second AC port. The converter 140 may be controlled to act as an Uninterruptible Power supply (UPS) to compensate for any brown out of the first AC output and/or to provide extra peak power to support and safeguard the grid connection:

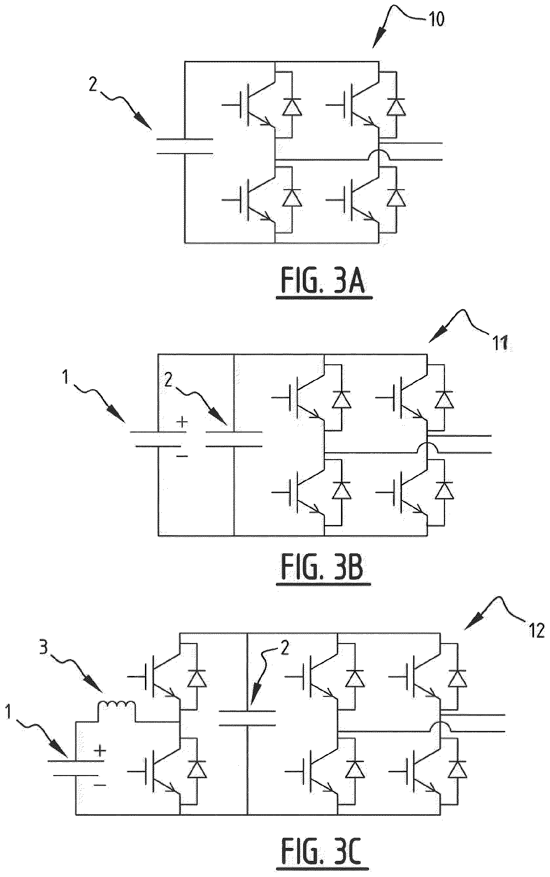

Figure 2 illustrates an energy storage system based on a prior art multilevel topology which may be used as a local three-phase AC microgrid using a plurality of cells 210 connected in series. Each cell 210 typically comprises a plurality of controllable switches and an energy storage element. The controllable switches may comprise transistors with diodes in antiparallel for bidirectional operation. Other suitable controllable bidirectional switches may be envisaged. Suitable switches may be of the reverse conduction type, including among others IGBTs with diodes in antiparallel, Si MOSFETs, SiC MOSFETs and GAN devices. Figure 3A shows an example of such a prior art cell for a multi-level converter to be used in a topology as in Figure 2. The cell 10 of Figure 3A is based on a full-bridge converter of four transistors, each with a diode in antiparallel, and a capacitor 2. Figure 3B shows another example of a prior art cell 11 based yet on a full-bridge converter, a capacitor 2 and a battery 1. Figure 3C shows further example of a prior art cell 12 based yet on full-bridge converter connected across a capacitor 2, a battery 1, a capacitor 2 and a boost converter being connected between the battery 1 of the cell and the cell capacitor 2.

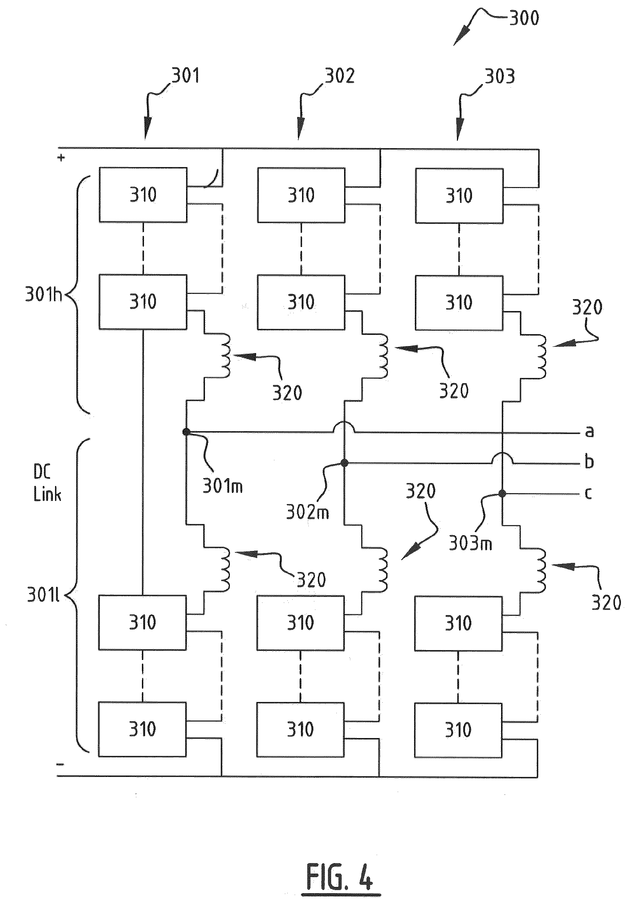

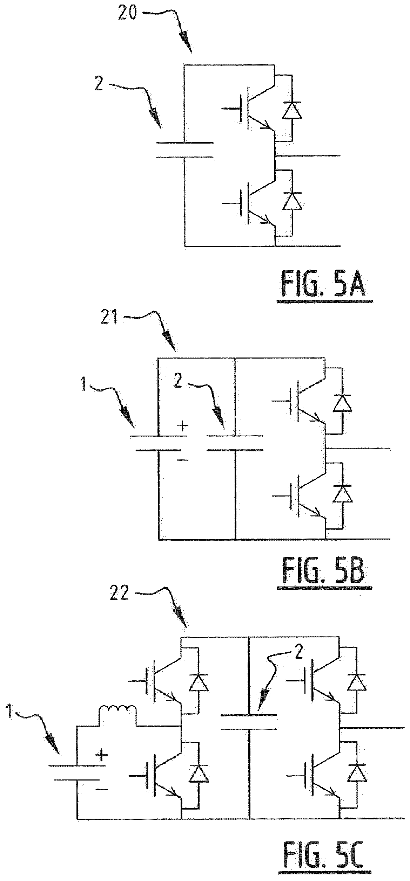

The multilevel topology has also been used as part of DC/AC converter between a DC link and a three-phase network. Figure 4 illustrates such a known prior art arrangement of a multilevel DC/AC converter 300 with a plurality of legs 301-303. Each leg 301-303 comprises a respective upper arm 301h-303h and a respective lower arm 3011-3031. A respective upper arm 301h-303h is then connected in series with a respective lower arm 3021-3031. The connection point between an upper arm and a lower arm is a middle point, 301m-303m. Each middle point is connected to a respective output AC phase, a, b, c. Each arm comprises a plurality of cascaded cells 310 and at least one inductor 320. The Figures 5A-5C show then three different prior art cells 20-22 based on a half-bridge converter comprising at least two transistors with diodes in anti-parallel and at least one energy storage element (a battery 1 and/or a capacitor 2). The cell 22 of Figure 5C further comprises a boost converter connected between a battery 1 of the cell 22 and a cell capacitor 2, where a half-bridge further connects the cell capacitor 2 to the rest of the converter.

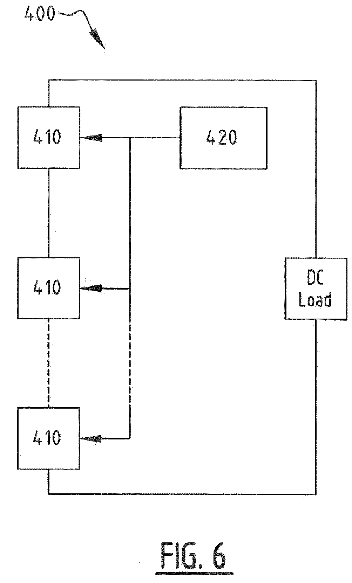

Figure 6 further illustrates how a multilevel converter topology according to the prior art may be used to provide a high-power DC charging station. The plurality of cascaded connected cells 410 are then controlled by a controller 420 such as to power a DC load, for instance batteries of an electric vehicle.

Although these prior art solutions are individually addressing one use scenario, there is yet a need for an integrated versatile power converter arrangements able to address a wide range of use scenarios including both high power DC charging uses and AC microgrid uses.

An object of the invention, next to other objects, is to provide an integrated versatile power converter arrangement.

This object, next to other objects, is met by a device according to claim 1. Specifically, this is met by a power converter arrangement comprising a first AC port for connection to an AC grid network having a first voltage, a second AC port for connection to an AC microgrid network having a second voltage, a DC port for connection to one or more external DC power sources and/or to one or more external DC loads, a DC bus connected to the DC port, said DC bus having a DC bus voltage, a unidirectional AC/DC stage arranged in between the first AC port and the DC port, a multilevel converter and a controller circuitry. The multilevel converter comprises at least two converter legs, wherein each converter leg comprises two converter arms connected in series at a middle point, wherein each converter arm comprises a plurality of series connected converter cells, each converter cell comprising at least one energy storage element for storing energy, said energy storage element having a voltage, semiconductor switches for connecting the at least one energy storage element to the rest of the converter arm. The converter legs are connected in parallel on the DC bus while the respective middle point of each leg is connected to a respective phase of the second AC port. The controller circuitry is configured for controlling the plurality of semiconductor switches of each arm to control at least one of the DC bus voltage, one or more of the voltages of the plurality of energy storage elements, and the second voltage.

In this way, a power converter arrangement with energy storage capabilities and multiport capabilities can be obtained in a compact manner. The energy storage elements may provide energy storage capabilities that may be used in a plurality of manners to control at least one of the DC bus voltage, one or more of the voltages of the plurality of energy storage elements, and the second voltage. The power converter arrangement may support both DC and AC ports increasing the versatility of use of the arrangement as a whole. In particular the power converter arrangement supports DC distribution and/or direct connection to DC sources in addition to AC distribution and direct connection to AC sources. It is noted that for the ease of labelling, the device of the invention has been called a power converter arrangement but could also be called a power converter and energy storage arrangement due to its energy storage capabilities.

According to a preferred embodiment, each converter cell may comprise at least four switches arranged to form a full bridge. In this way, the power converter arrangement may support connection to the second AC port and may allow DC side and AC side current controllability, offering thus intrinsic short circuit protection.

According to a preferred embodiment, the power converter arrangement may further comprise a cell DC link in between the energy storage element and the full bridge, with preferably a capacitor, more preferably with an additional converter between the energy storage element and the cell DC link. In this way, a further degree of control may be obtained.

According to a preferred embodiment, the at least one energy storage element may be any one or more of the following: a battery, a supercapacitor, a capacitor. The integrated energy storage elements in the cells may provide not only balancing power but also act as an energy source for auxiliary power. Black start may rely on these energy sources for proper operation without the need for external UPS.

According to a preferred embodiment, the first AC network may be a power grid or a generator powered network. In this way, the power converter arrangement may be used to optimize grid capacity utilization by optimally exploiting the available power.

According to a preferred embodiment, the second AC network may receive power from one or more renewable energy sources and/or delivers power to one or more AC loads. In this way, the power converter arrangement may form a local AC grid (microgrid).

According to a preferred embodiment, the DC input/output may be connected to any one or more of the following: one or more renewable power sources, one or more loads, one or more batteries of a vehicle. In this way, the power converter arrangement may form a local DC grid (microgrid).

According to a preferred embodiment, the power converter arrangement may further comprise a first protection circuit between the multilevel converter and the second AC port. In this way, back-up protection may be improved. According to a preferred embodiment, the arrangement may further comprise a second protection circuit between the multilevel converter and the DC port.

According to a preferred embodiment, one or more of the plurality of energy storage elements of an arm may be second-life batteries. Second-life batteries are batteries that have been previously used in applications (like electric vehicles), and have reached the end of their original life cycle. Second-life batteries may nevertheless be repurposed for less demanding uses. Second-life batteries typically retain around 70-80% of their original capacity. In this way, the costs may be kept under control while reducing the ecological impact.

According to a preferred embodiment, the DC port and the second AC port may be available simultaneously. In this way, both AC and DC loads may be powered simultaneously using power from the first AC network and using stored power in the multilevel converter. A UPS function for AC and/or DC loads may then be for instance realised.

According to a preferred embodiment, the DC bus voltage on the DC port and the second voltage on the second AC port may be controlled independently from each other. In this way, more control scenarios and thus more use scenarios for ethe end user may be envisaged.

According to a preferred embodiment, wherein the first AC port may be an input port. Alternatively, the first AC port may be an output port or a bidirectional port. For such alternatives, the AC/DC converter is to be adapted accordingly to have the required directional capabilities.

According to a preferred embodiment, the second AC port may be an input/output port configured for bidirectional flow of energy. Alternatively, the second AC port may be solely an input port or solely an output port.

According to a preferred embodiment, the second AC port may be a 3 phase AC port. Alternatively other number of phases may be envisaged.

According to a preferred embodiment, the DC port may be an input/output port configured for bidirectional flow of energy. Alternatively, the DC port may be solely an input port or solely an output port.

According to a preferred embodiment, the AC/DC stage may comprise a rectifier, preferably with unidirectional switches. In this way, an adaptation from the first AC network to the DC link may be realised.

According to a preferred embodiment, the AC/DC stage may comprise a DC-DC converter preferably with unidirectional switches. In this way, a two- stage conversion from AC to DC may be performed to ensure for instance power factor correction.

According to a preferred embodiment, the AC/DC stage may comprise a DC-DC converter with galvanic isolation. In this way, a two- stage conversion from AC to DC may be performed to ensure galvanic isolation.

According to a preferred embodiment, the power converter arrangement may further comprise a second AC/DC stage, wherein preferably the second AC/DC stage may comprise a rectifier and a DC/DC converter with galvanic isolation. In this way, a scalable AC grid connection to the first AC port and/or a high power DC bus 615 may be obtained.

According to a preferred embodiment, the power converter arrangement may further comprise a third AC port for connection to a third AC network having a third voltage, wherein the second AC/DC stage is connected on its AC input to said third AC port. In this way, further redundancy may be provided.

According to a preferred embodiment, the power converter arrangement may further comprise an additional leg for neutral generation or a neutral forming star arrangement. In this way, multiple phase voltages may be provided and fault protection may be increased.

According to a preferred embodiment, the controller may be configured for AC power supply at the second AC port when energy is unavailable at the first AC port based on power stored in the plurality of energy storage elements of the multilevel converter and/or power from the DC port. In this way, the power converter arrangement may operate as an AC microgrid.

According to a preferred embodiment, the controller may be configured for high power charging at the DC port based on power stored in the plurality of energy storage elements of the multilevel converter and/or power from the first and/or the second AC port. In this way, the power converter arrangement may operate as a DC microgrid.

According to a preferred embodiment, there may be provided a mobile power station comprising a housing, said housing comprising a power converter arrangement according to any of the above embodiments.

This and other aspects of the present invention will now be described in more detail, with reference to the appended drawings showing currently preferred embodiments of the invention, wherein:
- Figure 1 shows a prior art arrangement for creating a local microgrid using battery storage;
- Figure 2 shows a prior art arrangement for creating a local microgrid using battery storage based on a multilevel topology;
- Figure 3A-3C illustrate three examples of a prior art cell for an arrangement according to Figure 2;
- Figure 4 shows a prior art arrangement of a multilevel DC/AC converter between a DC link and an AC network;
- Figures 5A-5C illustrate three examples of a prior art cell for an arrangement according to Figure 4;
- Figure 6 illustrates a prior art multilevel converter arrangement as high-power DC charging station;
- Figure 7 illustrates a power converter arrangement according to an embodiment;
- Figure 8 illustrates a power converter arrangement according to another embodiment.

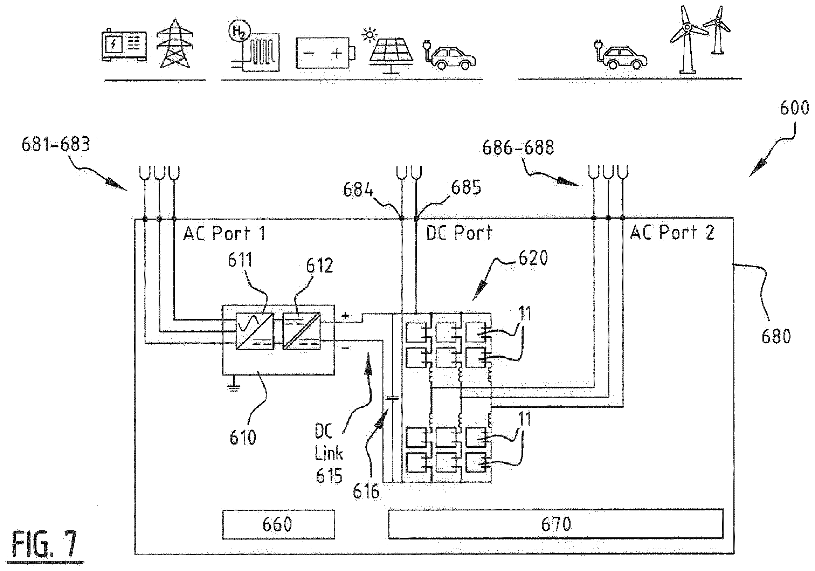

Figure 7 illustrates a power converter arrangement 600 with a plurality of power ports according to an embodiment. The power converter arrangement 600 comprises a first AC port for connection to a first AC network. The first Ac network may have a first voltage, and a first frequency. The first AC network may be a (main power or mains) grid or may be powered from a standalone generator. A main power grid or utility grid typically produces, transmits and distributes electricity to a wide area, often covering entire cities, regions, or even countries. It is a large0scale infrastructure that connects power plants with consumers, delivering electricity to homes, businesses and industries. The first AC port may be connected to a plurality of connectors 681-683 provided on the housing 680 of the power converter arrangement 600. The connectors 681-683 may be configured for output connection to the first AC network.

The power converter arrangement 600 further comprises a second AC port for connection to a second AC network. The second AC network may have a second voltage and a second frequency. The first and the second voltage may be the same or may be different. The first and the second frequency may be the same or may be different. The second AC network may be connected to renewable AC sources, for instance to windmills, and/or may be connected to AC loads, for instance a charging station for electrical vehicles may be connected on the second AC network. The second AC network may be a (local) microgrid, typically meant to produce, transmit, distribute electricity to a specific geographic area, such as for example a campus, a neighbourhood, or an industrial zone. The second AC port may be connected to a plurality of connectors 686-688 for output connection to the second AC network.

The power converter arrangement 600 further comprises a DC port for connection to one or more external DC power sources and/or to one or more external DC loads. The one or more external DC sources connectable to the DC port may be renewable energy sources, for instance a solar panel, or may DC storage means, for instance fuel cells. The one or more external DC loads connectable to the DC port may for instance be batteries of an electric vehicle. In that case, the DC port may act as an EV charging point. The DC port may be connected to two connectors 684 and 685 on the housing 680 of the power converter arrangement 600. The connector 684 and 685 may be configured for output connection to the one or more external DC power sources and/or to the one or more external DC loads.

The power converter arrangement 600 further comprises a DC bus 615 connected to the DC port. The DC bus 615 may support a DC bus voltage across a DC capacitor 616. An AC/DC stage 610 is further arranged in between the first AC port and the DC port, in particular in between the first AC port and the DC bus 615.

The AC/DC stage 610 may comprise a rectifier 611 and an isolated DC/DC converter 612 connected in series with each other. The rectifier 611 and/or the isolated DC /DC converter 612 may have controllable semiconductor switches. The power converter arrangement 600 further comprises a multilevel converter 620 and a controller circuitry 670. The controller circuitry 670 may be configured for controlling the multilevel converter 620 and/or the AC/DC stage 610.

Both the AC-to-DC stage 610 and the multilevel converter 620 are intrinsic current sources. The AC-to-DC stage 610 and the multilevel converter 620 are coupled via the common DC bus 615. The DC bus 615 may be supported by a network of capacitors. This arrangement provides/supports a current limited programmable DC voltage source on the Dc port.

The multilevel converter 620 comprises three converter legs, wherein each converter leg comprises two converter arms connected in series at a middle point, wherein each converter arm comprises a plurality of series connected converter cells 11. It is noted that the terms legs, arms, middle point as previously defined for Figure 4 are hereby reused for the description of Figure 7. In addition although a three-phase embodiment is shown, the invention may be envisaged for any number of phases. Each converter cell 11 (also referred to simply as cell) may comprise a battery for storing energy, said battery having a battery voltage, and semiconductor switches for connecting the battery to the rest of the converter arm. Instead of comprising a single battery, a cell may comprise a supercapacitor, a capacitor or combination of a plurality of such known storage elements (battery, capacitor, supercapacitor). A hybrid solution with both peak power capabilities and energy support can be envisioned by combining batteries and (super) capacitors. Each cell 11 may be configured for bidirectional flow of energy. Preferably a cell 11 may be based on a full bridge arrangement of controllable semiconductor switches combined with a battery (as in Figure 3B). Suitable semiconductor switches may be of the reverse conduction type, for instance the switches may be any one of the following: IGBTs with diodes in antiparallel, Si MOSFETs, SiC MOSFETs and GAN devices. As discussed in the prior art Figures 3A-3C, other alternative cell topologies may however be envisaged as long as suitable for bidirectional energy transfer. The converter legs are connected in parallel on the DC bus 615 while the respective middle point of each leg is connected to a respective phase of the second AC port. The controller circuitry 670 is configured for controlling the plurality of semiconductor switches of each arm to control at least one of: the DC bus voltage of the DC bus 615, one or more of the battery voltages, and the second voltage of the second AC port. It is noted that alternatively or additionally the first frequency and/or the second frequency of respectively the first and the second AC network may also be used as control parameters by the controller circuitry.

The proposed power converter arrangement comprises three power ports with the following benefits.

First, the first AC port illustrated in Fig. 7 is a scalable AC (small) grid connection. The first AC power port supports a unidirectional power flow, therewith avoiding/minimizing grid code compliancy issues. Both 50 Hz (e.g., Continental Europe and Asia) and 60 Hz power standards (e.g., large part of the Americas and maritime applications) are supported. The AC-to-DC converter 610 provides a medium frequency transformer based integrated galvanic insulation.

Second, the multilevel converter 620 is a bi-directional cascaded H-bridge DC-to-AC converter with integrated energy storage. The multilevel converter 620 constitutes a controllable power link between the DC port and the second AC port, which is typically a polyphase AC power port. The DC port is a bi-directional DC port. The DC port supports (fast) DC battery (re)charging (i.e., energy import). An external fast charger with DC input may be powered due to the controllable reverse power flow capability (i.e., energy export) of the DC port. A unique feature of the multilevel converter 620 is its DC side and AC side current controllability. State-of-the-Art DC link two or multi-level converters typically support a current mode control at the AC port but rely on (passive) overcurrent protection devices (e.g., fast acting fuses or DC circuit breakers) to protect the DC side. The associated surge currents during short circuit impose high electro-mechanical and thermal stresses resulting in potential catastrophic converter failure. The proposed multilevel converter 620, however, offers intrinsic short circuit protection. Fast acting DC (semiconductor) circuit breakers which normally must be added are not required since they are already integral part of the converter topology. A pole-to-pole short-circuit can hence even be ridden through. Fuses may be added for back-up protection. The integrated energy storage elements in the cells 11 (e.g., Lithium-Ion battery modules) provide not only balancing power but also act as an energy source for auxiliary power. Black start for example relies on these energy sources for proper operation without the need for external UPS.

Finally, the power control of the AC/DC converter 610 and the multilevel converter 620 are independent. They may and should be coordinated in certain circumstances, for instance to provide optimal grid capacity utilization, DC fast charger functionality and for internal energy management (i.e., State of Charge control). As already mentioned, the controller circuitry 670 may simultaneously control the semiconductor switches of the AC/DC stage 610 and of the multilevel converter 620.

The power converter arrangement 600 may comprise a housing 680. The housing 680 may be provided with the connectors 681-683 of the first AC port, the connectors 684-685 of the DC port and the connectors 686-688 of the second AC port on its exterior. The housing 680 may form a mobile unit that may be transported to any location. For remote locations without grid connections, the connectors 681-683 may remain uncoupled, while only the connectors 684-685 and 686-688 may be connected. For locations without a second AC network, the connectors 686-688 may remain uncoupled, while only the connectors 684-685 and 681-683 may be connected. For locations with neither a DC source nor a DC load, the connectors 684-685 may remain uncoupled, while only the connectors 681-683 and 681-683 may be connected. Accordingly, the controller circuitry 670 may for each location adapt the control strategy to the circumstance associated with the location. The same power converter arrangement may thus be used in many locations because its connections as well as its control strategies may be tuned to the local conditions.

The power converter arrangement 600 may further comprise a climate control module 660 for controlling the temperature inside the housing 680. The climate control module 660 may regulate the temperature in view of the state of charge of the energy storage elements and/or the thermal behaviour of the switches. The climate control module 660 and the controller circuitry 670 may communicate with each other and/or with external devices.

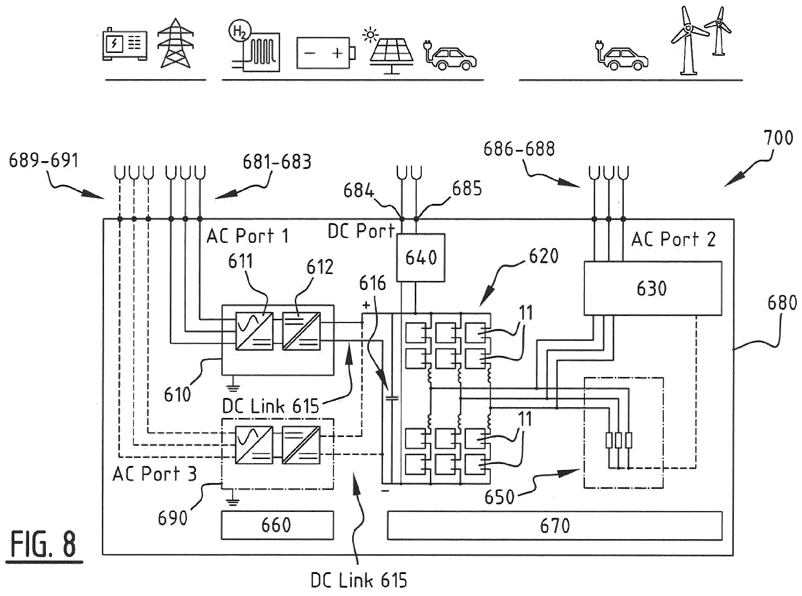

Figure 8 illustrates a power converter arrangement 700 according to another embodiment. Similar reference numbers in that other embodiment refer to similar elements as in the embodiment of Figure 7. Compared to Figure 7, the power converter arrangement 700 further comprises protection circuits 640 and 630. The protection circuit 640 may be arranged between the DC bus 615 and the DC port. The protection circuit 630 may be arranged between the AC outputs of the multilevel converter (ie., the middle points of the legs) and the second AC port. The protection circuits 630, resp. 640, may each comprise circuit breakers and/or other safety related devices.

The power converter arrangement 700 may further comprise a neutral forming circuit 650. The neutral forming circuit 650 may be a star arrangement deriving a neutral from the AC output phases of the multilevel converter 620 as illustrated in Figure 8. Alternatively, a neutral may be obtained from a middle point of an additional leg to the multi-level converter 620. The derived neutral may further be used by the protection circuit 630 to detect and protect against neutral faults.

Further according to another embodiment illustrated in Figure 8 with dotted lines, the power converter arrangement 700 may further comprise an additional AC/DC stage 690 for connection to the DC bus 615. The additional AC/DC stage 690 may be connected on its DC output in parallel with the first AC/DC stage 610. The additional AC/DC stage 690 may be connected on its AC side in parallel with the first AC/DC stage 610 i.e., to the second AC network. Alternatively, as illustrated in Figure 8, the additional AC/DC stage 690 may be connected on its AC side to a third AC port for connection to a third AC network (via connectors 689-691 provided on the housing 680). It is noted that the presence of an additional AC/DC stage 690 is unrelated to the protection circuits 640 and 630 and to the neutral forming circuit 650. The concept of an additional AC/DC stage 690 with or without an additional (third) AC port may be declined in that sense for Figure 7 as well.

Whilst the principles of the invention have been set out above in connection with specific embodiments, it is understood that this description is merely made by way of example and not as a limitation of the scope of protection which is determined by the appended claims.

Further embodiments are described by the following clauses:
Clause 1. A power converter arrangement comprising:
   - a first AC port for connection to a first AC network having a first voltage,
   - a second AC port for connection to a second AC network having a second voltage,
   - a DC port for connection to one or more external DC power sources and/or to one or more external DC loads,
   - a DC bus connected to the DC port, said DC bus having a DC bus voltage,
   - an AC/DC stage arranged in between the first AC port and the DC port,
   - a multilevel converter comprising at least two converter legs, wherein each converter leg comprises two converter arms connected in series at a middle point, wherein each converter arm comprises a plurality of series connected converter cells, each converter cell comprising:
      o at least one energy storage element for storing energy, said energy storage element having a voltage, and
      o semiconductor switches for connecting the at least one energy storage element to the rest of the converter arm,
   - wherein the converter legs are connected in parallel on the DC bus while the respective middle point of each leg is connected to a respective phase of the second AC port, and
   - a controller circuitry for controlling the plurality of semiconductor switches of each arm to control at least one of: the DC bus voltage, one or more of the voltages of the plurality of energy storage elements, and the second voltage.
Clause 2. The power converter arrangement of clause 1, wherein each converter cell comprises at least four switches arranged to form a full bridge.
Clause 3. The power converter arrangement of clause 2, further comprising a cell DC link in between the energy storage element and the full bridge, with preferably a capacitor, more preferably with an additional converter between the energy storage element and the cell DC link. Clause 4. The power converter arrangement of any of the above clauses, wherein the at least one energy storage element is any one or more of the following: a battery, a supercapacitor, a capacitor. Clause 5. The power converter arrangement of any of the above clauses, wherein the first AC network is a power grid or a generator powered network.
Clause 6. The power converter arrangement of any of the above clauses, wherein the second AC network receives power from one or more renewable energy sources and/or delivers power to one or more AC loads.
Clause 7. The power converter arrangement of any of the above clauses, wherein the DC input/output is connected to any one or more of the following: one or more renewable power sources, one or more loads, one or more batteries of a vehicle.
Clause 8. The power converter arrangement of any of the above clauses, further comprising a first protection circuit between the multilevel converter and the second AC port.
Clause 9. The power converter arrangement of any of the above clauses, further comprising a second protection circuit between the multilevel converter and the DC port.
Clause 10. The power converter arrangement of any of the above clauses, further comprising a climate control module for controlling the temperature of the multilevel converter.
Clause 11. The power converter arrangement of any of the above clauses, wherein one or more of the plurality of energy storage elements of an arm are second-life batteries.
Clause 12. The power converter arrangement of any of the above clauses, wherein the DC port and the second AC port are available simultaneously.
Clause 13. The power converter arrangement of any of the above clauses, wherein the DC bus voltage on the DC port and the second voltage on the second AC port are controlled independently from each other.
Clause 14. The power converter arrangement of any of the above clauses, wherein the first AC port is an input port.
Clause 15. The power converter arrangement of any of the above clauses, wherein the second AC port is an input/output port configured for bidirectional flow of energy.
Clause 16. The power converter arrangement of any of the above clauses, wherein the second AC port is a 3 phase AC port.
Clause 17. The power converter arrangement of any of the above clauses, wherein the DC port is an input/output port configured for bidirectional flow of energy.
Clause 18. The power converter arrangement of any of the above clauses, wherein the AC/DC stage comprises a rectifier, preferably with unidirectional switches.
Clause 19. The power converter arrangement of any of the above clauses, wherein the AC/DC stage comprises DC-DC converter preferably with unidirectional switches.
Clause 20. The power converter arrangement of any of the above clauses, wherein the AC/DC stage comprises a DC-DC converter with galvanic isolation.
Clause 21. The power converter arrangement of any of the above clauses, further comprising a second AC/DC stage connected on its DC output to the DC bus, wherein preferably the second AC/DC stage comprises a rectifier and a DC/DC converter with galvanic isolation.
Clause 22. The power converter arrangement of the previous clause, further comprising a third AC port for connection to a third AC network having a third voltage, wherein the second AC/DC stage is connected on its AC input to said third AC port.
Clause 23. The power converter arrangement of any of the above clauses, further comprising an additional leg for neutral generation or a neutral forming star arrangement.
Clause 24. The power converter arrangement of any of the above clauses, wherein the controller is configured for AC power supply at the second AC port when energy is unavailable at the first AC port based on power stored in the plurality of energy storage elements of the multilevel converter and/or power from the DC port.
Clause 25. The power converter arrangement of any of the above clauses, wherein the controller is configured for high power charging at the DC port based on power stored in the plurality of energy storage elements of the multilevel converter and/or power from the first and/or the second AC port.
Clause 26. A mobile power station comprising a housing, said housing comprising a power converter arrangement according to any of the above clauses.
Clause 27. The power converter arrangement of any of the above clauses, wherein the semiconductor switches are any of the following: IGBTs with diodes in antiparallel, Si MOSFETs, SiC MOSFETs, GAN devices.

## Claims

1. A power converter arrangement comprising:
- a first AC port for connection to an AC grid network having a first voltage,
- a second AC port for connection to an AC microgrid network having a second voltage,
- a DC port for connection to one or more external DC power sources and/or to one or more external DC loads,
- a DC bus (615) connected to the DC port, said DC bus having a DC bus voltage,
- a unidirectional AC/DC stage (610) arranged in between the first AC port and the DC port,
- a multilevel converter (620) comprising at least two converter legs, wherein each converter leg comprises two converter arms connected in series at a middle point, wherein each converter arm comprises a plurality of series connected converter cells (11), each converter cell (11) comprising:
o at least one energy storage element (1) for storing energy, said energy storage element (1) having a voltage, and
o semiconductor switches for connecting the at least one energy storage element (1) to the rest of the converter arm,
- wherein the converter legs are connected in parallel on the DC bus (615) while the respective middle point of each leg is connected to a respective phase of the second AC port, and
- a controller circuitry (670) for controlling the plurality of semiconductor switches of each arm to control at least one of: the DC bus voltage, one or more of the voltages of the plurality of energy storage elements (1), and the second voltage.

2. The power converter arrangement of claim 1, wherein each converter cell (11) comprises at least four switches arranged to form a full bridge, further preferably comprising a cell DC link in between the energy storage element and the full bridge, with preferably a capacitor (2), more preferably with an additional converter between the energy storage element (1) and the cell DC link.

3. The power converter arrangement of any of the above claims, wherein the at least one energy storage element (1) is any one or more of the following: a battery, a supercapacitor, a capacitor.

4. The power converter arrangement of any of the above claims, further configured such that the second AC network receives power from one or more renewable energy sources and/or delivers power to one or more AC loads, and/or further configured such that the DC input/output is connected to any one or more of the following: one or more renewable power sources, one or more loads, one or more batteries of a vehicle.

5. The power converter arrangement of any of the above claims, further comprising a first protection circuit (630) between the multilevel converter (620) and the second AC port, and/or further comprising a second protection circuit (640) between the multilevel converter (620) and the DC port, and/or further comprising a climate control module (660) for controlling the temperature of the multilevel converter (620).

6. The power converter arrangement of any of the above claims, wherein one or more of the plurality of energy storage elements (1) of an arm are second-life batteries.

7. The power converter arrangement of any of the above claims, further configured such that the DC port and the second AC port are available simultaneously.

8. The power converter arrangement of any of the above claims, further configured such that the DC bus voltage on the DC port and the second voltage on the second AC port are controlled independently from each other.

9. The power converter arrangement of any of the above claims, wherein the first AC port is an input port, and/or wherein the second AC port is an input/output port configured for bidirectional flow of energy, and/or wherein the second AC port is a 3 phase AC port, and/or wherein the DC port is an input/output port configured for bidirectional flow of energy.

10. The power converter arrangement of any of the above claims, wherein the unidirectional AC/DC stage comprises a rectifier, preferably with unidirectional switches, and/or wherein the unidirectional AC/DC stage comprises a DC-DC converter preferably with unidirectional switches, and/or wherein the unidirectional AC/DC stage comprises a DC-DC converter with galvanic isolation.

11. The power converter arrangement of any of the above claims, further comprising a second, preferably unidirectional, AC/DC stage connected on its DC output to the DC bus, wherein preferably the second AC/DC stage comprises a rectifier and a DC/DC converter with galvanic isolation, further preferably comprising a third AC port for connection to a third AC network having a third voltage, wherein the second AC/DC stage is connected on its AC input to said third AC port.

12. The power converter arrangement of any of the above claims, further comprising an additional leg for neutral generation or a neutral forming star arrangement.

13. The power converter arrangement of any of the above claims, wherein the controller is configured to control the semiconductor switches of the multilevel converter (620) to obtain AC power supply at the second AC port, when energy is unavailable at the first AC port, based on power stored in the plurality of energy storage elements (1) of the multilevel converter (620) and/or based on power from the DC port, and/or wherein the controller is configured to control the semiconductor switches of the multilevel converter (620) for high power charging at the DC port based on power stored in the plurality of energy storage elements (1) of the multilevel converter (620) and/or power from the first and/or the second AC port.

14. A mobile power station comprising a housing, said housing (680) comprising a power converter arrangement according to any of the above claims.

15. The power converter arrangement of any of the above claims, wherein the semiconductor switches are any of the following: IGBTs with diodes in antiparallel, Si MOSFETs, SiC MOSFETs, GAN devices.
